# EUROPÄISCHE PATENTSCHRIFT

(11) **EP 2 154 475 B1**
(45) Veröffentlichungstag und Bekanntmachung des Hinweises auf die Patenterteilung: **03.07.2013**
(21) Anmeldenummer: 09165176.0
(22) Anmeldetag: 10.07.2009
(51) Int. Cl.: G01C 15/00, H02K 5/26

(54) **Rotationsbaulaser**
Rotating construction laser
Laser de construction rotatif

(30) Priorität: 06.08.2008 DE 102008041033
(43) Veröffentlichungstag der Anmeldung: 17.02.2010
(73) Patentinhaber: HILTI Aktiengesellschaft, 9494 Schaan (LI)
(72) Erfinder: Barth, Stefan, 6800, Feldkirch (AT); Ammann, Manfred, 6923, Lauterach (AT)

(56) Entgegenhaltungen:
- EP-A1- 1 387 467
- EP-A1- 1 411 371
- EP-A2- 0 854 351
- EP-A2- 1 006 339
- WO-A1-03/048684
- US-A- 5 606 802
- US-A- 6 163 373
- US-A1- 2003 229 997
- US-A1- 2007 103 672

## Beschreibung

Die Erfindung betrifft einen Lasergerät mit einer Lasereinheit, einer Antriebseinrichtung und einer Dämpfereinrichtung zum Schutz der Antriebseinrichtung.

Dabei ist unter Lasergerät ein Baulaser zu verstehen, wie er im Baugewerbe zu Zwecken der Definition, Übertragung bzw. Nivellierung von Ebenen, Linien oder Punkten eingesetzt wird. Somit lassen sich statische Baulaser wie Punkt- oder Linienlaser ebenso unter dem Begriff Lasergerät subsumieren wie Rotationsbaulaser, bei dem die Lasereinheit einen zumindest teilweise rotierenden Laserstrahl aussendet. Insbesondere kommt die Erfindung bei Rotationsbaulasern mit einer als Rotationseinheit ausgebildeten Lasereinheit zum Einsatz, weswegen sich die nachfolgende Beschreibung zur Vereinfachung auch auf diese Art von Baulaser bezieht. Es sei allerdings darauf hingewiesen, dass dies keine Einschränkung des Schutzumfanges bewirkt und die Erfindung sich ebenso auf alle anderen Arten von Baulasern mit einer verstellbaren Lasereinheit bezieht.

Rotationsbaulaser mit einer Lasereinheit, die einen zumindest teilweise rotierenden Laserstrahl aussendet, werden vor allem im Baugewerbe eingesetzt, um auf Wänden, Decken und Böden horizontale, vertikale oder definiert geneigte Ebenen festzulegen. Rotationsbaulaser werden auch, beispielsweise im Scanbetrieb, dazu verwendet, vordefinierte Abschnitte von Ebenen oder Markierungen (Punkte, Striche, etc.) festzulegen.

Bei einem Rotationsbaulaser wird eine Rotationseinheit mittels einer Lagereinrichtung im Wesentlichen justiert. D.h., in der Regel erfolgt vor der Justage eine Grobeinstellung, beispielsweise von einer Bedienperson. Dies kann beispielsweise von Hand unter Zuhilfenahme von von außen sichtbaren am Rotationsbaulaser angebrachten Libellen erfolgen. Anschließend kann die Bedienperson eine automatische Justage einleiten, bei der die Rotationseinheit beispielsweise mittels Servomotoren bzw. Antriebseinrichtungen und der Lagereinrichtung fein eingestellt (justiert) wird.

Bei Rotationsbaulasern ist eine robuste Konstruktion von großer Bedeutung, da die Geräte im Baugewerbe außerordentlichen Belastungen ausgesetzt sind. Gleichzeitig müssen die Geräte eine hohe Präzision aufweisen. Beispielsweise ist die notwendige Auflösung des Antriebs bei einem Lasergerät bzw. einem Rotationsbaulaser mit einer Spezifikation von 10 bis 20 Winkelsekunden circa 1 Winkelsekunde. Dies ergibt eine Auflösung der Längen von unter 1 µm, dementsprechend empfindlich sind solche Antriebe gegenüber mechanischen Überlasten, wie sie zum Beispiel durch Fall, hartes Aufsetzen des Gerätes etc. entstehen.

Aus US 5,606,802 A ist ein Lasergerät mit einem Gehäuse, einer Lasereinheit, einer Antriebseinrichtung zum Neigen der Lasereinheit und einer Dämpfereinrichtung, die zwischen dem Gehäuse und der Lasereinheit angeordnet ist, bekannt. Mittels der Dämpfereinrichtung sind im Wesentlichen Kraftkomponenten in der Wirkrichtung der Antriebseinrichtung dämpfbar. Nachteilig ist, dass die Dämpfereinrichtung nicht geeignet ist, die Antriebseinrichtung und die Lasereinheit gegenüber mechanischen Überlasten zu schützen.

Der Erfindung liegt die Aufgabe zugrunde, einen Rotationsbaulaser bereitzustellen, der ausgewählte Komponenten, beispielsweise die Antriebseinrichtung zum Neigen der Lasereinheit, ausreichend schützt.

Die Aufgabe wird erfindungsgemäβ durch ein Lasergerät mit den Merkmalen des Anspruchs 1 gelöst. Vorteilhafte Weiterbildungen ergeben sich aus den abhängigen Ansprüchen.

Der im Folgenden näher beschriebene Rotationsbaulaser gemäß einer Ausführungsform weist eine Lasereinheit auf. Die Lasereinheit kann beispielsweise eine Rotationseinheit enthalten, die mittels Kugellagern drehbar um eine Drehachse gelagert ist und eine Umlenkeinrichtung aufweist. Die Umlenkeinrichtung kann dabei dazu dienen, den Laserstrahl umzulenken und beispielsweise auf eine Wand projizieren, um dort die genannten Markierungen zu erzeugen.

Der Rotationsbaulaser umfasst ferner empfindliche Komponenten, wie beispielsweise eine Antriebseinrichtung (Schrittmotor oder dergleichen) mit einer Antriebswelle zum Neigen der Lasereinheit. Um ein Neigen der Lasereinheit zu ermöglichen, ist diese beispielsweise in einer Lagereinrichtung wie beispielsweise ein Kardangelenk, Kugelkalottenlagerung oder Gleitlager, gelagert. Zum Neigen der Lasereinheit kann die Antriebseinrichtung über ein Gewinde mit einem Antriebskolben oder ähnlichem verbunden sein. Bei einer Drehung des Motors schiebt sich der Kolben somit in eine vorgebbare Richtung, sodass eine Kraft auf ein fest mit dem Gehäuse verbundenes Abstützteil, beispielsweise eine Platte oder ähnliches, aufbringbar ist. Somit kann die Antriebseinrichtung die Lasereinheit neigen.

Das Abstützteil kann auch Teil des Gehäuses sein. Mittels der Antriebseinrichtung kann also eine Kraftkomponente erzeugt werden, die zwischen dem Gehäuse und der zu neigenden Lasereinheit wirkt.

Erfindungsgemäß ist zwischen der Antriebseinrichtung und der Lasereinheit eine Dämpfereinrichtung vorgesehen, wobei die Dämpfereinrichtung auf der Seite der Antriebseinrichtung angeordnet ist, die der Antriebswelle gegenüber liegt. Die Antriebseinrichtung ist dann nicht fest bzw. starr mit der Lasereinheit oder einem mit der Lasereinheit fest verbundenen Teil verbunden. Die Antriebseinrichtung ist z.B. mittels bzw. über die Dämpfereinrichtung mit der Lasereinheit verbunden.

Die Antriebseinrichtung mit der Antriebswelle weist parallel zur Achse der Antriebswelle eine Wirkrichtung auf, in welcher mit der Antriebseinrichtung eine Kraftkomponente erzeugbar ist, die zwischen dem Gehäuse und der zu neigenden Lasereinheit wirkt, so dass die Lasereinheit geneigt wird. Die Dämpfereinrichtung ist so angeordnet, dass mittels der Dämpfereinrichtung im Wesentlichen Kraftkomponenten in der Wirkrichtung der Antriebseinrichtung dämpfbar sind.

Unter "Dämpfereinrichtung" werden hier jegliche Bauteile verstanden, die eine Dämpf- oder Federwirkung oder ähnliches aufweisen. Eine Dämpfereinrichtung ist also dazu geeignet, Impulse, Schocks, große Kräfte, etc. zu absorbieren bzw. aufzunehmen. Die Dämpfereinrichtung kann daher auch als Impulsabsorptionsmittel oder Schockabsorptionsmittel bezeichnet werden.

Wie bereits oben angedeutet, ist die Lasereinheit bezüglich des Gehäuses des Rotationsbaulasers beweglich gelagert, so dass die Lasereinheit in einem bestimmten Bereich neigbar ist. Aufgrund der beweglichen Lagerung kann aufgrund der Masse der Lasereinheit bei einem Schock auf das Gehäuse eine große Kraft auf die Antriebseinrichtung einwirken, insbesondere können große Kraftkomponenten in Wirkrichtung der Antriebseinrichtung auftreten. Beispielsweise kann eine große Kraftkomponente auf die Achse der Antriebseinrichtung wirken. Die Dämpfereinrichtung ist nun so angeordnet, dass sie derartige Kraftkomponenten aufnehmen kann. Dazu ist die Dämpfereinrichtung auf der Seite der Antriebseinrichtung angeordnet, die der Antriebswelle gegenüber liegt (s. Figs.). Die Dämpfereinrichtung kann also direkt zwischen Antriebseinrichtung und Lasereinheit bzw. der Motorhalterung angeordnet sein. Hier wird davon ausgegangen, dass die Motorhalterung Teil der Lasereinheit ist.

Die Dämpfereinrichtung kann also beispielsweise direkt an der Antriebseinrichtung in axialer Richtung der Antriebswelle vorgesehen sein. Dort wo die Antriebseinrichtung bisher im Stand der Technik fest mit der Lasereinheit verbunden war, ist also erfindungsgemäß eine Dämpfereinrichtung vorgesehen. Die Dämpfereinrichtung, beispielsweise eine Feder, kann auch vorgespannt sein und somit eine Vorspannkraft auf die Antriebseinrichtung ausüben. Die Dämpfereinrichtung kann somit auch als "Vorspanneinrichtung" bezeichnet werden.

Bevorzugt sind mittels der Dämpfereinrichtung also im Wesentlichen Kraftkomponenten in einer Wirkrichtung der Antriebseinrichtung dämpfbar. Die Wirkrichtung der Antriebseinrichtung kann beispielsweise im Wesentlichen mit der Antriebswelle der Antriebseinrichtung zusammenfallen. Dies ist beispielsweise dann der Fall, wenn eine Konstruktion wie oben beschrieben gewählt wird, bei der auf der Antriebswelle eine Gewindespindel vorgesehen ist, die einen Kolben mit Innengewinde antreibt. Mittels der Dämpfereinrichtung können also vektorielle Kraftkomponenten gedämpft werden, die parallel zur Wirkrichtung der Antriebseinrichtung sind.

Bevorzugt kann die Direktionskonstante (Dämpferkonstante bzw. Federkonstante) der Dämpfereinrichtung so gewählt sein, dass die Dämpfereinrichtung im Normalbetrieb im Wesentlichen nicht verformt wird. Im "Normalbetrieb" ist der Rotationsbaulaser bestimmungsgemäß in Gebrauch. Das heißt, die Lasereinheit wird geneigt bzw. eingestellt, so dass zum Beispiel ein vorbestimmter Winkel der Lasereinheit gegenüber der Normalen eingestellt wird. Im Normalbetrieb wird beispielsweise eine Nivellierungslinie an eine Wand projiziert oder eine Markierung oder dergleichen.

Der Normalbetrieb ist insbesondere nicht, wenn der Rotationsbaulaser transportiert wird, herunterfällt, hart aufgesetzt wird oder nicht bestimmungsgemäß im Betrieb ist.

In einer bevorzugten Ausführungsform wird die Direktionskonstante (Federkonstante bzw. Dämpferkonstante) der Dämpfereinrichtung so gewählt, dass Kräfte aufgrund von Schocks auf das Gehäuse mittels der Dämpfereinrichtung absorbierbar sind. Zur Festlegung der Direktionskonstante können beispielsweise Experimente durchgeführt werden, bei denen Kräfte gemessen werden, die beim Herunterfallen oder anderen Krafteinwirkungen außerhalb des Normalbetriebs auf das Gehäuse auftreten können. Die Direktionskonstante kann dann so gewählt werden, dass die Dämpfereinrichtung bei den experimentell ermittelten Kräften verformt wird, nicht aber im Normalbetrieb. Somit ist gewährleistet, dass die Dämpfereinrichtung die präzise Einstellung der Neigung der Lasereinheit im Normalbetrieb nicht beeinflusst. Eine Verformung der Dämpfereinrichtung tritt nur bei Schocks oder dergleichen auf, wie sie beispielsweise bei einem Herunterfallen des Rotationsbaulasers aus einer bestimmten Höhe auftreten.

Bevorzugt kann die Dämpfereinrichtung eine Federeinrichtung sein. Dabei ergibt sich der Vorteil, dass eine Feder reversibel ist. Andererseits ist es auch möglich, dass die Dämpfereinrichtung eine nicht-reversible Dämpfereinrichtung ist. Beispielsweise kann die Dämpfereinrichtung ein billiges nicht-reversibles Dämpfelement sein, das nach einem Schock auf das Gehäuse leicht austauschbar ist. Möglich ist hier der Einsatz eines ein Elastomer umfassenden Dämpfelements

In einer weiteren bevorzugten Ausführungsform kann der Rotationsbaulaser eine Rückholfedereinrichtung aufweisen, mittels welcher eine Rückholkraft mit einer Rückholkraftkomponente entgegen der Wirkrichtung der Antriebsrichtung erzeugbar ist. Dabei ist die Rückholkraftkomponente im Wesentlichen entgegengesetzt zu den mittels der Dämpfereinrichtung dämpfbaren Kraftkomponenten.

In einer bevorzugten Ausführungsform kann die Direktionskonstante der Dämpfereinrichtung ein Vielfaches der Federkonstante der Rückholfeder sein. Beispielsweise kann die Dämpferkonstante bzw. Federkonstante der Dämpfereinrichtung dem 5- bis 10-fachen oder 10- bis 20-fachen der Federkonstante der Rückholfeder entsprechen. Dabei ist mittels der Rückholfeder eine Kraft von ca. 5-10 N in der Nulllage der Lasereinrichtung erzeugbar.

Gemäß einer weiteren Ausführungsform kann der Rotationsbaulaser auch weitere Antriebseinrichtungen zum Neigen der Lasereinheit aufweisen, wobei zwischen den weiteren Antriebseinrichtungen und der Lasereinheit jeweils weitere Dämpfereinrichtungen vorgesehen sind. Insbesondere kann der Rotationsbaulaser zwei Antriebseinrichtungen, wobei mit jeder der beiden Antriebseinrichtungen eine Neigung in einer vorgegebenen Schwenkebene ermöglicht wird.

Bevorzugt kann die Dämpfereinrichtung eine Feder und ein Dämpfelement enthalten, das heißt, die Dämpfereinrichtung ist eine kombinierte Feder/Dämpfereinheit. Damit sind sowohl eine Kraftaufnahme und eine zumindest teilweise Absorption der Kraft möglich. Es wird also in diesem Fall eine Wirkung im Wesentlichen wie bei einem Stoßdämpfer erzeugt.

Die Erfindung wird im Folgenden anhand der beigefügten Figuren erläutert. In den Figuren zeigen:
Fig. 1 eine Schnittansicht des Rotationsbaulasers,
Fig. 2 eine weitere Schnittansicht mit dargestellter Rückholfeder.

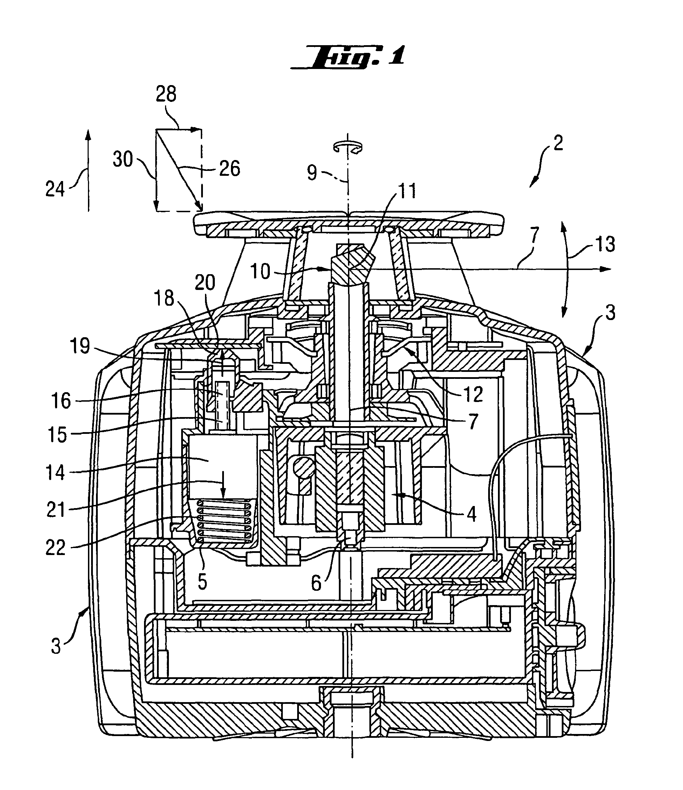

Fig. 1 zeigt einen Rotationsbaulaser 2 mit Lasereinheit 4. Die Lasereinheit 4 umfasst beispielsweise einen Laser 6 zur Erzeugung eines Laserstrahls 7 und eine Rotationseinheit 8, die um eine Rotationsachse 9 drehbar ist. Die Lasereinheit 4 umfasst beispielsweise auch eine Umlenkeinrichtung 10 zum Umlenken des Laserstrahls 7 an einem Umlenkpunkt 11. Weiter umfasst die Lasereinheit 4 eine Halterung 5 für einen Antrieb 14.

Die Lasereinheit 4 ist auf einer Lagereinrichtung 12 gelagert. Die Lagereinrichtung 12 kann beispielsweise eine Kugelkalottenlagerung, Kardanlagerung oder kardanähnliche Lagerung sein, die eine Neigung der Lasereinheit 4 in einer vorgegebenen Schwenkebene ermöglicht. Somit ist die Lasereinheit 4 gegenüber dem Gehäuse 3 beweglich. Bei einer Neigung der Lasereinheit 4 kann der Laserstrahl 7 bezüglich des Gehäuses 3 geneigt werden, wie dies durch die Pfeile 13 angedeutet ist.

Der Rotationsbaulaser 2 weist ferner die Antriebseinrichtung 14 mit einer Antriebswelle 15 auf. Auf der Antriebswelle 15 ist eine Gewindespindel 16 vorgesehen, die in einen Kolben 18 mit Innengehäuse eingreift. Somit kann der Kolben 18 durch ein Drehen der Antriebswelle 15 bezüglich der Achse der Antriebswelle 15 nach oben und unten bewegt werden.

Beispielsweise kann der Kolben 18 von der Antriebseinrichtung 14 weg bewegt werden (in der Zeichenebene in Fig. 1 nach oben) und so eine Kraft 19 auf eine Abstützplatte 20, die fest mit dem Gehäuse 3 verbunden ist, ausüben. Dadurch wird eine weitere Kraft 21 auf eine Dämpfereinrichtung 22 ausgeübt.

Wie zu sehen ist, liegt die Dämpfereinrichtung 22 zwischen der Antriebseinrichtung 14 und der Lasereinheit 4. Somit wird die Kraft 21 via der Dämpfereinrichtung 22 auf die Lasereinheit 4 bzw. die Halterung 5 übertragen.

In der in Fig. 1 dargestellten Ausführungsform ist die Dämpfereinrichtung 22 eine Feder. Alternativ kann aber auch ein nicht reversibles Dämpferelement oder eine Kombination aus einem Dämpferelement und einer Feder verwendet werden.

Vorteilhafterweise wird die Federkonstante bzw. Direktionskonstante der Dämpfereinrichtung 22 so gewählt, dass sich die Dämpfereinrichtung 22 im Normalbetrieb im Wesentlichen nicht verformt.

In der Darstellung von Fig. 1 wird davon ausgegangen, dass die Kraft 19 eine Kraftkomponente ist, die durch die Antriebseinrichtung 14 in der zuvor beschriebenen Weise erzeugt wird und somit eine Kraft ist, die im Normalbetrieb auftritt. Somit wird die Kraft 21 die Dämpfereinrichtung 22 im Wesentlichen nicht verformen.

Die Dämpfereinrichtung 22 kann vorgespannt sein, damit der Motor 14 spielfrei gelagert ist.

Aus der vorstehenden Beschreibung ist klar, dass die Antriebseinrichtung 14 eine Wirkrichtung 24 hat. Der Kolben 18 bewegt sich entlang der Wirkrichtung 24.

Durch ein Herunterfallen oder beim Transport des Rotationsbaulasers 2 kann ein Schock auf das Gehäuse 3 einwirken. Dabei wirkt eine große Kraft auf das Gehäuse 3, die in Fig. 1 schematisch mit Bezugszeichen 26 gekennzeichnet ist. Die durch den Schock auftretende Kraft 26 hat eine erste Kraftkomponente 28 und eine zweite Kraftkomponente 30.

Durch die Kraft 26 kann aufgrund der Masse/Trägheit der Lasereinheit 4 eine entsprechend große Kraft auf die Antriebseinrichtung bzw. die mit der Antriebseinrichtung verbundenen empfindlichen Teile wie beispielsweise Kolben 18, Gewindespindel 16 etc. auftreten. Um Schäden an diesen Teilen und der Lasereinheit 4 zu verhindern, können zumindest Teile der Kraft 26 durch die Dämpfereinrichtung 22 absorbiert werden. Insbesondere können Kräfte die aufgrund der zweiten Kraftkomponente 30 auf die Antriebseinrichtung 14 bzw. die Lasereinheit 4 wirken, wirksam absorbiert werden.

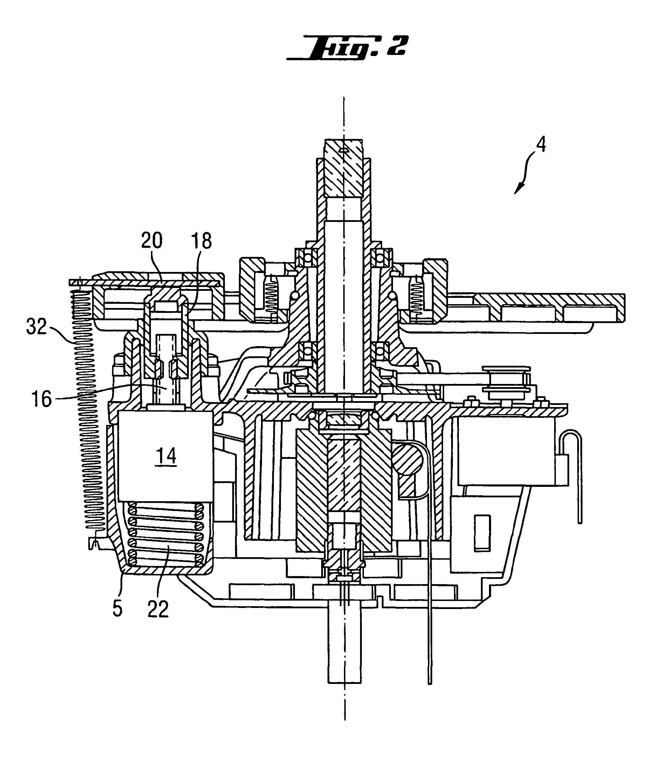

Die Antriebseinrichtung 14 drückt bzw. schiebt also den Kolben 18 in eine Richtung. In die andere Richtung zieht eine Rückholfeder 32 das zu verstellende Teil (Lasereinheit 4) zurück, wie dies in Fig. 2 dargestellt ist. Durch diese Wirkungsweise wird eine einfache Lösung erreicht, welche vorgespannt sein kann (mittels der Dämpfereinrichtung 22 und der Rückholfeder 32) und somit spielfrei arbeitet.

Eine Gefährdung der Antriebseinrichtung ohne die Dämpfereinrichtung 22, d.h. ein Rotationsbaulaser aus dem Stand der Technik, tritt auf, wenn eine zu große, für den Normalbetrieb nicht vorgesehene Kraft gegen die Antriebsrichtung (Wirkrichtung 24 in Fig. 1) auftritt. In der anderen Richtung wird die Antriebseinrichtung nicht oder nur gering belastet, da die Rückholfeder nachgibt und diese Kraft zumindest zum Teil durch die Rückholfeder abgefangen wird.

Bei der Erfindung kann die Antriebseinrichtung sicher geschützt werden: Wirkt eine große Kraft auf das Gehäuse von außen ein, mit einer Kraftkomponente in Wirkrichtung bzw. parallel zur Wirkrichtung der Antriebseinrichtung 14, so kann eine entsprechende Kraftkomponente, die auf die Antriebseinrichtung wirkt und diesem schaden könnte, durch die Dämpfereinrichtung 22 zumindest teilweise absorbiert.

Erfindungsgemäß wird also der Antrieb in Wirkrichtung nicht fest mit seiner Halterung 5 bzw. der Lasereinheit 4 verbunden (geschraubt oder ähnliches), sondern zwischen der Halterung und der Antriebseinrichtung 14 wird die Dämpfereinrichtung 22, beispielsweise eine Vorspannfeder vorgesehen. Mittels der Vorspannfeder kann der Motor in seiner Arbeitslage gehalten werden. Im Sinne der Beschreibung ist also die Halterung 5 des Motors als Teil der Lasereinheit 4 zu betrachten.

Wie man anhand von Fig. 2 erkennen kann, wirkt die Dämpfereinrichtung 22 entgegengesetzt zur Rückholfeder 32 und muss dadurch eine Kraft erzeugen, welche ein Vielfaches der Kraft der Rückholfeder beträgt.

In anderen Worten sollte die Federkonstante bzw. Direktionskonstante der Dämpfereinrichtung 22 wesentlich größer sein als die der Rückholfeder 32. Somit kann verhindert werden, dass die Dämpfereinrichtung 22 im Normalbetrieb verformt wird.

## Patentansprüche

1. Lasergerät (2) mit:
einem Gehäuse (3),
einer Lasereinheit (4),
einer Antriebseinrichtung (14) zum Neigen der Lasereinheit (4) mit einer Antriebswelle (15), wobei die Achse der Antriebswelle (15) eine Wirkrichtung aufweist, in welcher mit der Antriebseinrichtung (14) eine Kraftkomponente erzeugbar ist, die zwischen Gehäuse (3) und Lasereinheit (4) wirkt, so dass die Lasereinheit (4) geneigt wird; und
einer Dämpfereinrichtung (22), die so zwischen dem Gehäuse (3) und der Lasereinheit (4) angeordnet ist, dass mittels der Dämpfereinrichtung (22) im Wesentlichen Kraftkomponenten (30) in der Wirkrichtung der Antriebswelle (15) dämpfbar sind,
**dadurch gekennzeichnet, dass** die Dämpfereinrichtung (22) zwischen der Antriebseinrichtung (14) und der Lasereinheit (4) angeordnet ist, wobei die Dämpfereinrichtung (22) auf der Seite der Antriebseinrichtung (14) angeordnet ist, die der Antriebswelle (15) gegenüber liegt.

2. Lasergerät gemäß Anspruch 1, wobei die Direktionskonstante der Dämpfereinrichtung (22) so gewählt ist, dass die Dämpfereinrichtung (22) im Normalbetrieb im Wesentlichen nicht verformt wird.

3. Lasergerät gemäß einem der vorstehenden Ansprüche, wobei die Direktionskonstante der Dämpfereinrichtung (22) so gewählt ist, dass Kräfte aufgrund von Schocks auf das Gehäuse (3) mittels der Dämpfereinrichtung (22) absorbierbar sind.

4. Lasergerät gemäß einem der vorstehenden Ansprüche, wobei die Dämpfereinrichtung eine Federeinrichtung (22) ist.

5. Lasergerät gemäß einem der Ansprüche 1 bis 4, wobei die Dämpfereinrichtung ein nicht-reversibles Dämpfelement ist.

6. Lasergerät gemäß einem der vorstehenden Ansprüche, mit einer Rückholfedereinrichtung (32) mittels welcher eine Rückholkraft mit einer Rückhol-Kraftkomponente entgegen der Wirkrichtung (24) der Antriebseinrichtung (14) erzeugbar ist, wobei die Rückhol-Kraftkomponente im Wesentlichen entgegengesetzt zu den mittels der Dämpfereinrichtung (22) dämpfbaren Kraftkomponenten ist.

7. Lasergerät gemäß Anspruch6, wobei die Direktionskonstante der Dämpfereinrichtung ein Vielfaches der Federkonstante der Rückholfeder (32) entspricht.

8. Lasergerät gemäß Anspruch 6 oder 7, wobei die Dämpferkonstante bzw. Federkonstante der Dämpfereinrichtung (22) dem 5-10 oder 10-20 fachen der Federkonstante der Rückholfeder (32) entspricht.

9. Lasergerät gemäß einem der vorstehenden Ansprüche, mit
weiteren Antriebseinrichtungen zum Neigen der Lasereinheit, und
weiteren Dämpfereinrichtungen jeweils angeordnet zwischen den weiteren Antriebseinrichtungen und der Lasereinheit.

10. Lasergerät gemäß einem der vorstehenden Ansprüche, wobei die Dämpfereinrichtung eine Feder und ein Dämpfelement enthält.

11. Lasergerät gemäß einem der vorstehenden Ansprüche, wobei die Dämpfereinrichtung vorgespannt ist.

## Claims

1. Laser system (2) with:
a housing (3),
a laser unit (4),
a drive device (14) with a drive shaft (15) for tilting the laser unit (4), the axis of the drive shaft (15) having an active direction in which a force component that acts between housing (3) and laser unit (4) to tilt the laser unit (4) can be generated by the drive device (14); and
a damper device (22) which is arranged between the housing (3) and the laser unit (4) so that force components (30) in the active direction ofthe drive shaft (15) can be substantially damped by means ofthe damper device (22),
**characterized in that** the damper device (22) is arranged between the drive device (14) and the laser unit (4), the damper device (22) being arranged on the side of the drive device (14) located opposite the drive shaft (15).

2. Laser system according to Claim 1 wherein the direction constant of the damper device (22) is chosen so that the damper device (22) is substantially not deformed during normal operation.

3. Laser system according to either of the preceding claims wherein the direction constant of the damper device (22) is chosen so that forces due to impacts on the housing (3) can be absorbed by means of the damper device (22).

4. Laser system according to any one of the preceding claims wherein the damper device is a spring device (22).

5. Laser system according to any one of Claims 1 to 4 wherein the damper device is a non-reversible damping element.

6. Laser system according to any one of the preceding claims, with a restoring spring device (32) by means of which a restoring force with a restoring force component in the opposite direction to the active direction (24) of the drive device (14) can be generated, the restoring force component being substantially opposed to the force component dampable by means of the damper device (22).

7. Laser system according to Claim 6 wherein the direction constant of the damper device is equal to a multiple of the spring constant of the restoring spring (32).

8. Laser system according to Claim 6 or Claim 7 wherein the damper constant or spring constant ofthe damper device (22) is equal to 5-10 or 10-20 times the spring constant of the restoring spring (32).

9. Laser system according to anyone of the preceding claims, with further drive devices for tilting the laser unit and further damper devices respectively arranged between the further drive devices and the laser unit.

10. Laser system according to any one of the preceding claims wherein the damper device comprises a spring and a damping element.

11. Laser system according to any one of the preceding claims wherein the damper device is biased.

## Revendications

1. Appareil laser (2) comprenant :
un boîtier (3),
une unité laser (4),
un système d'entraînement (14) servant à incliner l'unité laser (4) avec un arbre d'entraînement (15), dans lequel l'axe de l'arbre d'entraînement (15) présente une direction d'action, dans laquelle une composante de force peut être générée à l'aide du système d'entraînement (14), ladite composante de force agissant entre le boîtier (3) et l'unité laser (4) de manière à incliner l'unité laser (4) ; et
un système d'amortissement (22) qui est disposé entre le boîtier (3) et l'unité laser (4) de telle manière que des composantes de force (30) peuvent être essentiellement amorties au moyen du système d'amortissement (22) dans la direction d'action de l'arbre d'entraînement (15),
**caractérisé en ce que** le système d'amortissement (22) est disposé entre le système d'entraînement (14) et l'unité laser (4), dans lequel le système d'amortissement (22) est disposé sur le côté du système d'entraînement (14) qui fait face à l'arbre d'entraînement (15).

2. Appareil laser selon la revendication 1, dans lequel la constante directionnelle du système d'amortissement (22) est choisie de telle manière que le système d'amortissement (22) n'est essentiellement pas déformé dans un mode de fonctionnement normal.

3. Appareil laser selon l'une quelconque des revendications précédentes, dans lequel la constante directionnelle du système d'amortissement (22) est choisie de telle manière que des forces peuvent être absorbées au moyen du système d'amortissement (22) du fait de chocs sur le boîtier (3).

4. Appareil laser selon l'une quelconque des revendications précédentes, dans lequel le système d'amortissement est un système à ressorts (22).

5. Appareil laser selon l'une quelconque des revendications 1 à 4, dans lequel le système d'amortissement est un élément d'amortissement non réversible.

6. Appareil laser selon l'une quelconque des revendications précédentes, comprenant un système à ressorts de rappel (32), qui permet de générer une force de rappel à l'aide d'une composante de force de rappel à l'encontre de la direction d'action (24) du système d'entraînement (14), dans lequel la composante de force de rappel est essentiellement opposée aux composantes de force pouvant être amorties au moyen du système d'amortissement (22).

7. Appareil laser selon la revendication 6, dans lequel la constante directionnelle du système d'amortissement correspond à un multiple de la constante élastique du ressort de rappel (32).

8. Appareil laser selon la revendication 6 ou 7, dans lequel la constante d'amortissement ou la constante élastique du système d'amortissement (22) correspondant à 5 à 10 fois ou 10 à 20 fois la constante élastique du ressort de rappel (32).

9. Appareil laser selon l'une quelconque des revendications précédentes, comprenant
des systèmes d'entraînement supplémentaires servant à incliner l'unité laser, et
des systèmes d'amortissement supplémentaires respectivement disposés entre les systèmes d'entraînement supplémentaires et l'unité laser.

10. Appareil laser selon l'une quelconque des revendications précédentes, dans lequel le système d'amortissement contient un ressort ou un élément d'amortissement.

11. Appareil laser selon l'une quelconque des revendications précédentes, dans lequel le système d'amortissement est précontraint.
